# EUROPÄISCHE PATENTSCHRIFT

(11) **EP 2 282 162 B1**
(45) Veröffentlichungstag und Bekanntmachung des Hinweises auf die Patenterteilung: **22.07.2015**
(21) Anmeldenummer: 10166137.9
(22) Anmeldetag: 16.06.2010
(51) Int. Cl.: G01B 11/16, G01B 11/24

(54) **Verfahren zur Überwachung der Maß- und/oder Formhaltigkeit einer aus Fasermaterial bestehenden Verstärkungsstruktur**
Method for monitoring the dimensions and/or form stability of a reinforcement structure made of fibrous material
Procédé de surveillance de la résistance de mesure et/ou de forme d'une structure de renforcement constituée de matériaux en fibres

(30) Priorität: 24.07.2009 DE 102009034507
(43) Veröffentlichungstag der Anmeldung: 09.02.2011
(73) Patentinhaber: Bayerische Motoren Werke Aktiengesellschaft, 80809 München (DE)
(72) Erfinder: Heim, Bernhard, 84032 Landshut (DE)

(56) Entgegenhaltungen:
- DE-A1- 10 241 752
- DE-A1- 19 626 889
- DE-A1- 19 801 330
- DE-C1- 19 925 462
- JP-A- 9 311 023

## Beschreibung

Die vorliegende Erfindung betrifft ein Verfahren zur Überwachung der Maß- und/oder Formhaltigkeit eines Objekts gemäß dem Oberbegriff des Patentanspruches 1.

Ein derartiges Verfahren ist aus der DE 102 41 752 A1 bekannt. Zum relevanten Stand der Technik zählen ferner die JP 9 311 023 A, DE 199 25 462 C1, DE 198 01 330 A1 sowie die DE 196 26 889 A1.

Um das Gewicht von Fahrzeugkarosserien zu verringern, erwägt man zunehmend den Einsatz von Faserverbundbauteilen, d.h. von Kunststoffbauteilen, die in ihrem Innern eine Verstärkungsstruktur aus Fasermaterial, z.B. aus Kohle-, Aramid-, Glasfasern oder aus anderen Fasermaterialien enthalten. Bei der Herstellung geometrisch komplexer Bauteile geht man häufig so vor, dass mehrere Vorformlinge (sogenannte Preforms) zu einer komplexen Verstärkungsstruktur zusammengesetzt werden. Um bei der anschließenden Herstellung eines Kunststoffbauteils die gewünschten geometrischen und mechanischen Eigenschaften zu erreichen, kommt es darauf an, dass die einzelnen Vorformlinge hinsichtlich Form und Maßen jeweils ihren Soll-Vorgaben entsprechen und dass die einzelnen Vorformlinge der Verstärkungsstruktur möglichst exakt relativ zueinander positioniert sind.

Aufgabe der Erfindung ist es, ein Verfahren zur Überwachung der Maß- und/oder Formhaltigkeit einer aus Fasermaterial bestehenden Verstärkungsstruktur zu schaffen, das in der Großserienproduktion effizient einsetzbar ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Bei der Herstellung komplexer Faserverbundbauteile werden zunächst Vorformlinge aus Faserhalbzeugen, die z.B. in der Form eines Gewebes, eines Geleges, eines Gewirks, Gestricks o.ä. vorliegen können, hergestellt. Wichtige Schritte bei der Herstellung sind:
- Bereitstellung eines geeigneten Fasermaterials,
- Zuschneiden des Fasermaterials, Vorformen des Fasermaterials zu einem Vorformling,
- Konfektionieren, d.h. Zusammensetzen mehrerer Vorformlinge zu einer komplexeren Verstärkungsstruktur in einem Injektionswerkzeug,
- Einspritzen von Kunststoffmaterial, insbesondere von Harz, in das Werkzeug,
- Weiterbearbeitung des faserverstärkten Kunststoffbauteils.

Der Kern der Erfindung besteht darin, dass die aus Fasermaterial bestehende Verstärkungsstruktur mit mindestens einer Referenzmarke versehen wird, deren Position ermittelt, z.B. gemessen und mit einer Soll-Position verglichen wird.

Der Begriff "Referenzmarke" ist äußerst breit auszulegen. Eine Referenzmarke kann beispielsweise durch ein etikettartiges Element gebildet sein, das auf die aus Fasermaterial bestehende Verstärkungsstruktur aufgebracht wird, z.B. durch Kleben, Clipsen, Tackern, Klammern oder in anderer Weise. Alternativ dazu kann die Referenzmarke auf die Verstärkungsstruktur auch "aufgesprüht", aufgedruckt oder in anderer Weise darauf appliziert werden, z.B. durch Erzeugen einer Beschichtung hergestellt werden. Eine Referenzmarke kann auch durch einen oder mehrere Fäden gebildet sein, der bzw. die sich optisch von dem übrigen Fasermaterial abheben und deren Lage bzw. Position somit automatisiert detektierbar ist. Beispielsweise kann eine Referenzmarke durch zwei sich schneidende Fäden - oder alternatives Faserhalbzeug - gebildet sein, wobei der Schnittpunkt bzw. die Lage und Orientierung der betreffenden Fäden mittels einer automatischen Überwachungseinrichtung, z.B. mittels eines Kamerasystems und einer entsprechenden Auswerteelektronik bzw. Auswertesoftware identifizierbar ist.

Bei der Referenzmarke kann es sich beispielsweise um ein Fadenkreuz, mehrere konzentrische Kreise o.ä. handeln. Wichtig ist, dass die Referenzmarke eindeutig erkennbar bzw. automatisch detektierbar die Position eines Punktes, einer Linie oder eines anderen geometrischen Elements definiert.

Die Applikation der Referenzmarke kann vor, während oder nach der Umformung eines das Ausgangsmaterial der Verstärkungsstruktur bildenden Materials zu dem Vorformling erfolgen. Bei der Herstellung von Vorformlingen wird beispielsweise eine Matte, ein Gewebe, ein Gewirk oder eine andersartige Struktur, z.B. aus Kohlefasern, in ein Umformwerkzeug eingebracht, umgeformt und in einem RTM-Rozess (Resin Transfer Molding) mit einem Harz getränkt. Vor, während oder nach diesem Umformvorgang, mit dem der Vorformling hergestellt wird, kann die Referenzmarke appliziert bzw. erzeugt werden. "Erzeugen" bedeutet in diesem Zusammenhang, dass die Referenzmarke auch in die Faserstruktur eingeprägt werden kann, d.h. bereits bei der Gelegeherstellung aufgebracht werden kann.

Über Referenzmarken, die z.B. vor oder bei der Bereitstellung bzw. vor oder nach dem Zuschneiden des Fasermaterials auf das Fasermaterial appliziert oder in das Fasermaterial integriert werden oder die während oder nach dem Umformen des Fasermaterials appliziert werden, ist eine exakte Kontrolle der Form- und Maßhaltigkeit der Verstärkungsstruktur möglich.

Derartige Referenzmarken können auch bei Qualitätskontrolle späterer Fertigungsschritte, wie z.B. der Montage von faserverstärkten Kunststoffbauteilen, eingesetzt werden.

Mittels zweier oder mehrerer Referenzmarken pro Bauteil kann für jeden Prozessschritt die genaue Position des Bauteils überprüft werden. Je mehr Referenzmarken vorgesehen sind, desto präziser kann die Form und Maßhaltigkeit eines Bauteils überprüft werden.

Das Vermessen der Referenzmarken kann z.B. über ein Kamerasystem und eine entsprechende Auswerteelektronik bzw. Auswertesoftware erfolgen.

## Patentansprüche

1. Verfahren zur Überwachung der Maß- und/oder Formhaltigkeit eines Objekts, das mit mindestens einer Referenzmarke versehen ist oder wird, wobei die Position der Referenzmarke ermittelt bzw. gemessen und mit einer Sollposition verglichen wird,
**dadurch gekennzeichnet, dass**
das Objekt aus einem aus Fasermaterial bestehenden Halbzeug hergestellt wird, durch Zuschneiden des Halbzeugs und Umformen des zugeschnittenen Halbzeugs in einen Vorformling, der eine Verstärkungsstruktur für ein herzustellendes, faserverstärktes Kunststoffbauteils bildet, wobei die Referenzmarke vor, während oder nach der Umformung des Halbzeugs in einen Vorformling auf- bzw. an dem Halbzeug appliziert wird.

2. Verfahren nach Anspruch 1,
**dadurch gekennzeichnet, dass** die Verstärkungsstruktur aus mehreren einzelnen jeweils aus Fasermaterial bestehenden Vorformlingen zusammengesetzt wird, die jeweils mindestens eine Referenzmarke aufweisen, deren Position jeweils mit einer Sollposition verglichen wird und/oder deren Position relativ zu mindestens einer anderen Referenzmarke der Verstärkungsstruktur ermittelt und mit einer zugeordneten Sollrelativposition verglichen wird.

3. Verfahren nach einem der Ansprüche 1 oder 2,
**dadurch gekennzeichnet, dass** die Referenzmarke durch ein etikettartiges Element gebildet ist.

4. Verfahren nach einem der Ansprüche 1 bis 3,
**dadurch gekennzeichnet, dass** die Referenzmarke einen Messpunkt definiert.

5. Verfahren nach einem der Ansprüche 1 bis 4,
**dadurch gekennzeichnet, dass** die Referenzmarke durch zwei sich fadenkreuzartig schneidende Linien gebildet ist.

6. Verfahren nach einem der Ansprüche 1 bis 4,
**dadurch gekennzeichnet, dass** die Referenzmarke durch einen Kreis bzw. durch mehrere konzentrische Kreise gebildet ist.

7. Verfahren nach einem der Ansprüche 1 bis 6,
**dadurch gekennzeichnet, dass** die Referenzmarke durch einen Aufkleber gebildet ist, der auf die Verstärkungsstruktur aufgeklebt wird.

8. Verfahren nach einem der Ansprüche 1 bis 6,
**dadurch gekennzeichnet, dass** die Referenzmarke auf die Verstärkungsstruktur aufgesprüht bzw. durch Aufbringen einer Beschichtung erzeugt wird.

9. Verfahren nach einem der Ansprüche 1 bis 6,
**dadurch gekennzeichnet, dass** die Referenzmarke auf die Verstärkungsstruktur aufgedruckt wird.

10. Verfahren nach einem der vorangehenden Ansprüche,
**dadurch gekennzeichnet, dass** die Referenzmarke durch einen oder mehrere in das Fasermaterial integrierte Fäden oder ein andersartiges Faserhalbzeug gebildet ist.

11. Verfahren nach Anspruch 10,
**dadurch gekennzeichnet, dass** die Referenzmarke durch sich schneidende Fäden, die in die Faserstruktur integriert sind, gebildet ist.

12. Verfahren nach einem der Ansprüche 1 bis 11,
**dadurch gekennzeichnet, dass** die Position der Referenzmarke mittels eines Kamerasystems aufgenommen und mittels einer Auswerteelektronik bzw. Auswertesoftware ermittelt wird.

## Claims

1. A method for monitoring the dimensional and/or form stability of an object, which is or is to be provided with at least one reference mark, wherein the position of the reference mark is determined or measured and compared with a desired position,
**characterised in that**
the object is produced from a semi-finished product comprising fibrous material by cutting to size the semi-finished product and forming the cut-to size semi-finished product into a preform, which forms a reinforcement structure for a fibre-reinforced plastics material component to be produced, wherein the reference mark is applied to or on the semi-finished product during or after the forming of the semi-finished product into a preform.

2. A method according to claim 1,
**characterised in that** the reinforcement structure is composed of a plurality of individual preforms comprising in each case of fibrous material, which in each case have at least one reference mark, the position of which is in each case compared with a desired position and/or the position of which is determined relative to at least one other reference mark of the reinforcement structure and is compared with an associated desired relative position.

3. A method according to either of claim 1 or claim 2,
**characterised in that** the reference mark is formed by a label-like element.

4. A method according to any one of claims 1 to 3,
**characterised in that** the reference mark defines a measuring point.

5. A method according to any one of claims 1 to 4,
**characterised in that** the reference mark is formed by two lines intersecting in a crosshair-like manner.

6. A method according to any one of claims 1 to 4,
**characterised in that** the reference mark is formed by a circle or by a plurality of concentric circles.

7. A method according to any one of claims 1 to 6,
**characterised in that** the reference mark is formed by a sticker, which is glued onto the reinforcement structure.

8. A method according to any one of claims 1 to 6,
**characterised in that** the reference mark is sprayed onto the reinforcement structure or is produced by applying a coating.

9. A method according to any one of claims 1 to 6,
**characterised in that** the reference mark is printed onto the reinforcement structure.

10. A method according to any one of the preceding claims,
**characterised in that** the reference mark is formed by one or more threads integrated into the fibrous material or a different type of fibrous semi-finished product.

11. A method according to claim 10,
**characterised in that** the reference mark is formed by intersecting threads, which are integrated into the fibrous structure.

12. A method according to any one of claims 1 to 11,
**characterised in that** the position of the reference mark is recorded by means of a camera system and/or determined by means of evaluation electronics or evaluation software.

## Revendications

1. Procédé de surveillance de la stabilité de dimension et/ou de forme d'un objet qui est ou sera pourvu d'au moins un repère de référence, la position de ce repère de référence étant détectée ou mesurée et comparée à une position de consigne,
**caractérisé en ce que**
l'objet est réalisé à partir d'un produit semi-fini constitué d'un matériau à base de fibres par découpe de ce produit semi-fini et mise en forme du produit semi-fini découpé selon une ébauche de forme qui constitue une structure de renfort pour un élément en matériau synthétique renforcé par des fibres devant être fabriquée, le repère de référence étant appliqué sur ou dans le produit semi-fini avant, pendant ou après la mise en forme de ce produit selon une ébauche de forme.

2. Procédé conforme à la revendication 1,
**caractérisé en ce que**
la structure de renfort est constituée par l'assemblage de plusieurs ébauches de forme constituées chacune d'un matériau à base de fibres qui comportent chacune au moins un repère de référence dont la position est respectivement comparée à une position de consigne et/ou dont la position relativement à au moins un autre repère de référence de la structure de renfort est détectée et comparée à une position relative de consigne associée.

3. Procédé conforme à l'une des revendications 1 et 2,
**caractérisé en ce que**
le repère de référence est formé par un élément de type étiquette.

4. Procédé conforme à l'une des revendications 1 à 3,
**caractérisé en ce que**
le repère de référence définit un point de mesure.

5. Procédé conforme à l'une des revendications 1 à 4,
**caractérisé en ce que**
le repère de référence est formé par deux lignes sécantes à croisée de brins.

6. Procédé conforme à l'une des revendications 1 à 4,
**caractérisé en ce que**
le repère de référence est formé par un cercle ou par plusieurs cercles concentriques.

7. Procédé conforme à l'une des revendications 1 à 6,
**caractérisé en ce que**
le repère de référence est formé par une étiquette adhésive qui est collée sur la structure de renfort.

8. Procédé conforme à l'une des revendications 1 à 6,
**caractérisé en ce que**
le repère de référence est pulvérisé sur la structure de renfort ou obtenu par application d'un revêtement.

9. Procédé conforme à l'une des revendications 1 à 6,
**caractérisé en ce que**
le repère de référence est imprimé sur la structure de renfort.

10. Procédé conforme à l'une des revendications précédentes,
**caractérisé en ce que**
le repère de référence est formé par un ou plusieurs brins intégrés dans le matériau à base de fils ou par un produit semi-fini à base de fibres d'un autre type.

11. Procédé conforme à la revendication 10,
**caractérisé en ce que**
le repère de référence est formé par des brins sécants qui sont intégrés dans la structure à base de fibres.

12. Procédé conforme à l'une des revendications 1 à 11,
**caractérisé en ce que**
la position du repère de référence est captée au moyen d'un système de caméra et détectée au moyen d'une électronique ou d'un logiciel d'exploitation.
